# EUROPEAN PATENT APPLICATION

(11) **EP 2 574 393 A1**
(43) Date of publication of application: **03.04.2013**
(21) Application number: 11183416.4
(22) Date of filing: 30.09.2011
(51) Int. Cl.: B01D 53/50, B01D 53/75, B01D 53/92, B01D 47/00, F01N 3/08

(54) **Scrubber system and process**

(71) Applicant: ALFA LAVAL AALBORG A/S, 9000 Aalborg (DK)
(72) Inventor: Hansen, Jens Peter, 9000 Aalborg (DK)
(74) Representative: von Friesendorff, Filip

(57) **Abstract**

The present invention relates to a method for removal of SO₂ from a marine engine or a marine boiler according to which method exhaust gas from the engine or boiler is in a first step cooled and washed with seawater, the seawater having a temperature within a first range, and subsequently in a second step washed with circulating fresh water added an alkaline chemical, the fresh water having a temperature in a second range. The invention further relates to a corresponding scrubber system.

## Description

### TECHNICAL FIELD

The invention relates to removal of constituents from waste gas and in particular to a system and a process for removing sulphur dioxide (SO₂) and particulate matters (PM) from marine engine exhaust gases.

### BACKGROUND OF THE INVENTION

Fossil fuels contain sulphur, which during combustion forms gaseous sulphur oxides, SOₓ. The amount of SOₓ in fuel exhausts vary according to natural differences in the sulphur content of fuels. The dominant constituent, making up more than 95% of the SOₓ emission from combustion of fossil fuel, is sulphur dioxide, SO₂ SO₂ is a toxic gas, directly harmful for both fauna and flora. A secondary effect of SO₂ emission to the atmosphere is formation of sulphate aerosols and a third well recognized result of SO₂ emissions is acid rain.

To meet existing and upcoming regulations on reduced sulphur oxide emissions, the use of fuel with low sulphur content is an option. However, there is limited availability of natural low sulphur fuels and the refinery process for desulphurization is costly and energy demanding. A potential sustainable alternative to the use of low sulphur fuels is removal) of constituents from the exhaust gas after the combustion process.

Due to legislative requirements, certain Flue Gas Desulphurization (FGD) or scrubber techniques are being adapted from their usual land-based applications to marine applications. So-called exhaust gas scrubbers or just scrubbers seem promising for applications onboard ships. Some well-known scrubbing techniques are shortly described below.

### Limestone

Wet scrubbers are well-know from especially coal fired power and cement plants where they have been a preferred solution to remove SO₂ from flue gasses for decades. The flue gas is usually cleaned by circulating slurry of water and limestone under the formation of gypsum, which is collected and dewatered. A large part of the gypsum is sold and used as e.g. filler in Portland cement. SO₂ removal efficiencies exceeding 98 % are typical in these applications. The chemical reactions taking place can formally be written as follows:

SO₂(g) + CaCO₃(s) + ½ O₂(g) → CaSO₄(s) + CO₂(g) (1)

Coal dust particles are usually collected in an electrostatic filter or bag filter prior to the scrubbing process, whereby contamination of the slurry and thereby the final gypsum product is avoided. Again, due to the need of particle filters and storage and handling of the powdered limestone reactant and gypsum product, usual scrubbing with limestone is considered inappropriate onboard ships.

### Fresh water (FW) with addition of sodium hydroxide

In other land-based installations, aqueous sodium hydroxide is used as an alkaline neutralizing agent instead of the limestone:

SO₂(g) + 2 NaOH(aq) + ½ O₂(g) → 2 Na⁺⁺ + SO₄⁻⁻ + H₂O (2)

The sodium sulfate formed is usually dissociated in the discharge water from the scrubber. From a process point of view, it is easier to use aqueous sodium hydroxide than limestone because handling of the limestone and gypsum powders are avoided. However, the applications are limited to smaller installations because of the costs of the sodium hydroxide. Sodium carbonate (Na₂CO₃) or sodium bicarbonate (NaHCO₃) could however be used as cheaper alternatives. Another major disadvantage for usage onboard a ship is that - depending on the conditions - a large amount of FW will be required and that the availability of FW is usually limited onboard a ship.

### Seawater

It is known technology to treat waste gases with seawater (SW). The pH of surface SW usually ranges from 8.1 to 8.9. Using this natural alkalinity to neutralize absorbed sulphur dioxide is well-known from Inert Gas Systems (IGS) onboard ships but also from several land-based installations. IGS have been supplied for more than 40 years to the tanker industry and SW scrubbers are today an integrated part in many of these systems. With absorption in SW, the SO₂ will mainly end as bisulfite and sulfate in the water, according to the following reactions:

SO₂ (g) ↔ SO₂(aq) (3)

SO₂(aq) + H₂O ↔ HSO₃⁻ + H⁺ (4)

HSO₃⁻ + O₂(aq) → SO₄⁻ + H⁺ (5)

The hydrogen ions then "push" to the natural carbonate balance in the water as follows:

H⁺ + CO₃⁻ ↔ HCO₃⁻ (6)

H⁺ + HCO₃⁻ ↔ H₂CO₃ (7)

H₂CO₃ ↔ H₂O + CO₂(g) (8)

The net result is formation of sulfate ions in the water and gaseous carbon dioxide, which is released to the atmosphere. The amount of the carbonate (CO₃⁻) and bicarbonate (HCO₃⁻) ions as well as other minor anions to react with hydrogen cations determine the so-called alkalinity or buffering capacity, which in turn is a measure of the amount of SO₂, which can be absorbed in the water. The obvious advantage of using SW instead of FW is that no neutralization chemicals (like NaOH or Na₂CO₃) are needed onboard a ship. The main disadvantage is that a very high water flow is required due to a limited SW alkalinity and that SW is relatively corrosive whereby the costs of the scrubber construction material increases.

### Adoption of scrubbers to marine applications

Another challenge for the adoption of land-based scrubbers to marine applications is the changing legislative requirements and also changing conditions when a ship sails through different waters. So-called Emission Control Areas (ECA) have been established with more strict SO₂ emission levels. From 2015, ships are not allowed to emit more SO₂ than corresponding to 0.1 % sulphur in the fuel oil within ECA. Outside ECA, the limit is 3.5 % S until 2020 and 0.5 % S after 2020. Contrary to land-based installations, this means that a scrubber must be much more efficient when a ship enters an ECA zone as well as that adjustments must be implemented to cope with changing SW alkalinity (in case of a SW scrubber), SW temperature and engine load.

Once a scrubber system has been installed on a ship, only limited degrees of freedom are left for adjusting the operation of the scrubber to comply with the changing legislative requirements and changing ambient conditions. An option is of course to over-dimension the size of the scrubber and the water system so that more than 98 % SO₂ removal efficiency can be obtained under worst possible conditions (high engine load, high fuel sulfur content, lower water alkalinity, ship in ECA, and extremely low water temperature). This is however not an attractive solution as this will only occur rarely and add costs to the investment in the scrubber system and also increase the operational costs under normal sailing conditions (e.g. 40-80 % engine load, 2.3 % fuel sulfur content, SW alkalinity on 2200 µmol/kg, and SW temperature between 5-15°C). In many situations, it will even be impossible to retrofit an over-dimensioned scrubber system onboard an existing ship due to very limited space available.

### PRIOR ART

WO 2007/054615 describes a SW scrubber system applicable for marine use. According to this invention, it is suggested to reduce the amount of required SW in the scrubber by concentrating the SW by reverse osmosis. The fresh water also produced by the reverse osmosis can be applied for NOₓ reduction in the engine or for other purposes onboard the ship.

WO 2008/015487 describes a FW scrubber system applicable for marine use. In this invention, a specially designed condensational scrubber is disclosed with the aim to improve PM removal efficiency and to avoid the necessity of exhaust gas reheat after the scrubber.

EP 1857169A1 also describes a FW scrubber system applicable for marine use. In one embodiment, a two section scrubber is suggested. Section A is for sulfur removal and section B is for condensation whereby the overall water consumption is reduced. In this case both sections are operated on fresh water with addition of caustic soda. The idea of creating clean FW in a later condensational stage has also been suggested and disclosed in US5657630A.

WO 2010/027938A2 describes a scrubber intended for cleaning flue gases from land based plants, especially metal smelting operations. The scrubber consists of two stages, a first sulfur removal stage operating on SW and a second water condensational stage for generating FW. The intention is to generate pure FW in the second stage and sodium hydroxide is therefore not added to this stage. As will be described in details below, the main intention of the second FW stage in our invention is to remove the last and difficult amount of sulfur oxide, which under some circumstances are difficult to remove in the first SW stage. We are therefore adding sodium hydroxide to the last stage.

A wet scrubber was installed by Aalborg Industries A/S (Alfa Laval Aalborg A/S since May 2011) onboard a ship and has been in operation since June 2010. This scrubber is the first scrubber in the world installed after a ships main engine (21 MW MAN 2-stroke). The scrubber is called a hybrid scrubber because it has the unique possibility to operate in either a SW mode or in a FW mode. The scrubber also comprises two sections. In the first section, the exhaust gas is cooled and cleaned by spraying in water in a downward flow parallel to the exhaust gas. In the second section, the exhaust gas is further cooled and cleaned by passing upwards through high surface fillings elements in a flow counter current to the water flow. It is not possible to spray in e.g. SW in the first sections and FW in the second section as suggested below. A general description of Aalborg Industries proto-type scrubber system has been published on several conferences.

### DISCLOSURE OF THE INVENTION

In SW mode, an efficient SO₂ removal has been found in the first jet sprayer section. This can be explained by the fact that the SO₂ concentration in the gas phase, which is the driving force for the absorption reaction, is relative high in the first section In the second absorption section, a large amount of SW is however necessary in order to remove the remaining SO₂ and comply with the strictest legislation on 0.1 % sulfur equivalents (S_{EQ}). With the current installation, the sulfur emission after the scrubber is usually between 0.1 - 0.3 % S_{EQ} when the engine is operated at full load (21 MW) and when the pump supplying SW to both sections is working at maximum (1000 m³/h).

In FW mode, it is not a problem to comply with the strict 0.1 % S_{EQ} limit. A bad SO₂ absorption efficiency has been found when starting up on clean FW but the efficiency increases significantly when the water has been re-circulated for approximately 10-30 minutes. This can be explained by the fact that also a fast reacting bicarbonate buffer builds up in the water. Beside SO₂ also CO₂ is absorbed from the engine exhaust gas. This CO₂ will also react with the added caustic soda:

CO₂(g) + OH⁻ → HCO₃⁻ (9)

Because most of the water is circulated back to the scrubber, the formed bicarbonate (HCO₃⁻) will get another chance to react with SO₂:

SO₂(g) + HCO₃⁻ → HSO₃⁻ + CO₂(g) (10)

After a certain time of operation, a bicarbonate buffer will thereby build up in the water. This buffer will cause the liquid to maintain a high pH during the entire SO₂ absorption process and thereby improve the overall SO₂ absorption efficiency.

To solve the potential problem of scrubbing with FW where no bicarbonate is present but also to make a more simplified automatic control of the dosing of alkaline, at least 20 % of "old" circulated water should remain in the system if the FW is going to be exchanged (it needs to be exchanged before it is saturated with sodium salts). The remaining 80 % of the FW can be cleaned and discharged. In this way, startup on clean fresh water without bicarbonate buffer in the water is avoided. Preferably the CO₂ level in the possible void space of the mentioned circulation tank should be kept as high as possible in order to prevent decomposition of the bicarbonate. In practice this is done by connecting the circulation tank to the exhaust gas piping system. In this way, also possible gas released from the water in the circulation tank can be scrubbed and monitored by the existing gas analyzer before it is emitted to the atmosphere.

In practice it has been found difficult to suddenly switch over from SW mode to FW mode because some SW will enter the FW system or dirty FW will be discharged to the sea. This will increase the amount of water that must be cleaned and also add the risk for depositions of e.g. calcium and magnesium carbonates in the scrubber system.

Another finding during SW mode operation is that warm seawater is slightly more efficient than cold SW. About 94 % SO₂ removal efficiency is obtained with 16°C SW but this drops to about 90 % when the SW temperature decreases to about 8°C. This finding is the opposite of what a person skilled in the art would predict (e.g. Andresen A., Mayer S. "Use of Seawater Scrubbing for SO2 removal from Marine Engine Exhaust Gas", Energy & Fuels 21 (6), 2007). Normally, the overall SO₂ absorption efficiency is controlled by the absorption rate from the gas to the liquid phase while the reaction within the liquid is considered to occur instantaneously. The absorption rate is therefore normally increasing with decreasing vapor pressure of SO₂ and hence decreasing temperature (like condensation of water). However, in our case, with very limited residence time of the liquid in the scrubber and with very cold SW in winter periods, the overall efficiency is no longer solely controlled by the gas to liquid phase absorption but also by the chemical reaction that must take place in the liquid SW. The later chemical reaction rate decreases with decreasing temperature.

Besides SO₂, also soot particles or particulate matter (PM) are absorbed in the water. The discharge water is therefore partly polluted with soot. A water cleaning unit has been implemented to clean the discharge water. Currently, a centrifuge is applied but filters or other water cleaning methods could also be applied. It is however only possible to clean the discharge water in FW mode because the flow of SW is too high. In SW mode, the discharge flow is about 50 m³/MWh while it is only 0.05-0.5 m³/MWh in FW mode.

It is the object of the present invention to provide an improved method and a corresponding system for removal of SO₂ from a marine engine or a marine boiler.

According to a first aspect of the present invention there is thus provided a method for removal of SO₂ from a marine engine or a marine boiler according to which method exhaust gas from said engine or boiler is in a first step cooled and washed with seawater, the seawater having a temperature within a first range, and subsequently in a second step washed with circulating fresh water added an alkaline chemical, the fresh water having a temperature in a second range.

According to an embodiment of the method according to the invention, the temperature of said seawater is lower than the temperature of said fresh water and said seawater is heat exchanged with the warmer fresh water.

According to an embodiment of the method according to the invention, said freshwater having a temperature within said second range is cooled by aid of the cooling system of a ship in which the method is used.

According to an embodiment of the method according to the invention, the seawater having a temperature within said first range can be cut off or wherein the amount of said seawater can be reduced while continuing scrubbing with fresh water.

According to an embodiment of the method according to the invention, the removal of contaminants from the exhaust gas, which contaminants are considered as pollutants in the seawater being discharged, is minimized in the first seawater section of a scrubber according to the invention.

According to an embodiment of the method according to the invention, the transfer of salt particles from the seawater used in the first step to the fresh water used in the second step in minimized.

According to an embodiment of the method according to the invention, the removal of contaminants which are considered as pollutants in the cleaned exhaust gas is maximized in the second freshwater section of a scrubber according to the invention.

According to an embodiment of the method according to the invention, the water from the second step is cleaned before being discharged.

According to an embodiment of the method according to the invention, fresh water containing bicarbonate buffer is never renewed with more pure fresh water than what is required to ensure that a sufficient SO₂ reduction can be maintained.

According to a second aspect of the present invention there is provided a scrubber system for removal of SO₂ from a marine engine or a marine boiler in which system the exhaust gas is cooled and washed with seawater in a first section and subsequently washed with circulating fresh water added an alkaline chemical in a second section.

According to an embodiment of the system according to the invention, the cold seawater to the first section is heat exchanged with the warmer fresh water circulating in the second section.

According to an embodiment of the system according to the invention, the cold seawater to the first section is from the ships cooling system.

According to an embodiment of the system according to the invention, the seawater to the first section can be closed or reduced while scrubbing will continue with fresh water in the second section.

According to an embodiment of the system according to the invention, the first scrubber section is designed and operated to minimize the removal of contaminants from the exhaust gas which are considered as pollutants in the seawater being discharged.

According to an embodiment of the system according to the invention, the system is designed and operated to minimize the transfer of salt particles from the first to the second section.

According to an embodiment of the system according to the invention, the second scrubber section is designed and operated to maximize the removal of contaminants which are considered as pollutants in the cleaned exhaust gas.

According to an embodiment of the system according to the invention, the water from the second scrubber section is cleaned before being discharged.

According to an embodiment of the system according to the invention, the fresh water in the system containing bicarbonate buffer is never renewed with more pure fresh water than a sufficient SO₂ reduction can be maintained.

### BRIEF DESCRIPTION OF THE DRAWING

The invention will be better understood with reference to the following detailed description of an embodiment of the invention in conjunction with the attached figure.

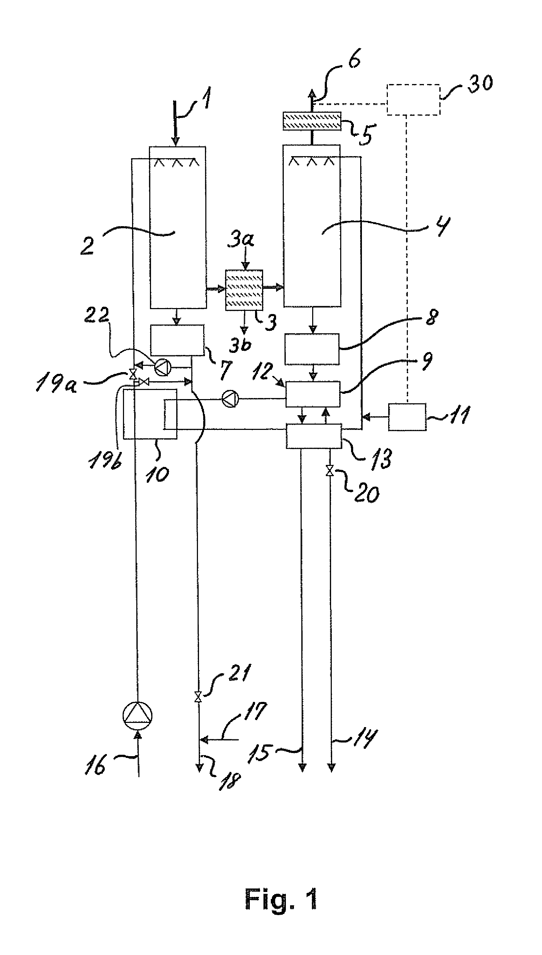

Figure 1 shows a scrubber system according to an embodiment of the invention.

### DETAILED DESCRIPTION OF THE INVENTION

A preferred embodiment of the invention is shown in figure 1. According to this embodiment, a scrubber section is preferably considered to consist of one scrubber stage, usually of a venturi type or a packed bed type. A section can also consist of several stages in serial which together provides the same overall functionality as one stage could have done. The intended functionality of a section should be understood from the context of the below description.

Exhaust gas **1** is cleaned with SW in a first scrubber section **2**. SW droplets are separated from the exhaust gas in unit **3** after which the exhaust gas is finally cleaned in a second scrubber section **4**. FW droplets are separated from the exhaust gas in a demister **5** and the cleaned exhaust **6** is emitted to the atmosphere. The FW from the scrubber **4** is degassed in a unit **8**, led to a circulation tank **9**, pumped to a heat exchanger **10,** neutralized with caustic soda **11** and let back to the scrubber **4.** The circulating water is connected with a water cleaning unit **13** which will keep the circulating water sufficiently clean for proper operation of the scrubber as well as it will clean the discharge water **14** so it comply with relevant water discharge criteria. Sludge (PM and water) **15** from the water cleaning unit must be collected onboard and disposed to adequate facilities when the ship is in port. Cold seawater **16** is pumped to the heat exchanger **10.** The valve **19a** is open under normal operation so all the cold seawater is introduced to the first scrubber section **2.** The SW is degassed in unit 7. A part of this water can be circulated back to scrubber section **2** by aid of a pump **22** and the remaining part can be discharged through an overboard valve **18.** The discharge pH value can be increased by opening valve **19b** or by dilution with clean SW **17.**

In special sensitive areas, where it might not be allowed to discharge water from the scrubber system, the valves **19a** and **20** can be closed and the scrubber can continue in FW mode until a saturated solution of sodium salt is reached in the circulation tank **9.** Depending on the heat resistance of the scrubber, it might be necessary to add a small amount of cooling water to the first scrubber section **2** as the main SW flow is bypassed this section. However, this will be a very limited amount of water and the added water will easily evaporate. Pure FW is preferably applied for this purpose and the part, which might not evaporate could be led to the circulation tank **9.** In case that the valve **19b** is open, the valve **21** should be controlled so air in the SW discharge pipe is eliminated and whereby the energy for supplying cold SW **16** up to the heat exchanger **10** is minimized.

Another possibility with the system shown in figure 1 is to compensate for the decreasing SW alkalinity, for example when a ship sails into the Baltic Sea. In such a scenario, the SW alkalinity will slowly decrease and the inlet SO₂ concentration to the scrubber section **4** will slowly start to increase correspondingly. However, this is accounted for by aid of a controller **30** that gets the SO₂ concentration in the exhaust gas **6** as input signal and which then gradually increases the dosing of the alkaline chemical **11.** A sudden change between SW and FW as in our current proto type scrubber is thereby avoided.

A benefit from the shown system is also that there is no FW consumption in normal operation. The gas will typically enter the first section **2** with a temperature on 180-250°C and then be cooled by the SW injected A lot of water is thereby evaporated to the gas phase whereby the gas is getting saturated with water vapor at the entrance to unit **3.** This water will condense in the second section **4** and add to the volume of circulating water. The amount of water condensing out will increase with the efficiency of the heat exchanger **10.** This water can account for the loss of water with the cleaned exhaust **6** and for the water being discharged through the cleaning unit **13.** Means for additional cooling of the circulating water can be established if the efficiency of the heat exchanger **10** is insufficient or if a colder SW temperature to the first section **2** is required.

The main purpose of unit **3** is to avoid transfer of SW to the second FW section **4.** Cleaning water **3a** can be added to keep this unit clean for soot (PM). This water **(3a)** as well as the SW droplets separated out is discharged through an outlet **3b.** Depending on the amount and composition, this water **(3b)** can be mixed with the SW **18** being discharged or the circulating FW. Overall the unit **3** should be optimized to have a low gas pressure drop and high droplet separation efficiency. Vanes for guiding the exhaust gas from unit **2** to **4,** and especially for distributing the exhaust gas at the inlet of 4, can be integrated with the droplet separation functionality of unit **3.**

## Claims

1. A method for removal of SO₂ from a marine engine or a marine boiler **characterized in that** exhaust gas from said engine or boiler is in a first step cooled and washed with seawater, the seawater having a temperature within a first range, and subsequently in a second step washed with circulating fresh water added an alkaline chemical, the fresh water having a temperature in a second range.

2. A method according to claim 1, wherein the temperature of said seawater is lower than the temperature of said fresh water and wherein said seawater is heat exchanged with the warmer fresh water.

3. A method according to claim 1, wherein said seawater having a temperature within said first range is heat exchanged with warmer sea water from the cooling system of a ship in which the method is used.

4. A method according to claim 1, wherein the seawater having a temperature within said first range can be cut off or wherein the amount of said seawater can be reduced while continuing scrubbing with fresh water.

5. A method according to claim 1, wherein the removal of contaminants from the exhaust gas, which contaminants are considered as pollutants in the seawater being discharged, is minimized in the first step.

6. A method according to claim 1, wherein according to which the transfer of salt particles from the seawater used in the first step to the fresh water used in the second step in minimized.

7. A method according to claim 1, wherein according to which the removal of contaminants which are considered as pollutants in the cleaned exhaust gas is maximized in the second step.

8. A method according to claims 1 and 5, wherein the water from the second scrubber section is cleaned before being discharged.

9. A method according to claim 1, wherein fresh water containing bicarbonate buffer is never renewed with more pure fresh water than what is required to ensure that a sufficient SO₂ reduction can be maintained.

10. Scrubber system for removal of SO₂ from a marine engine or a marine boiler **characterized in that** the exhaust gas is cooled and washed with seawater in a first section and subsequently washed with circulating fresh water added an alkaline chemical in a second section.

11. Scrubber system according to claim 10 wherein the cold seawater to the first section is heat exchanged with the warmer fresh water circulating in the second section.

12. Scrubber system according to claim 10 wherein the cold seawater to the first section is heat exchanged with warmer sea water from the ships cooling system.

13. Scrubber system according to claim 10, wherein the fresh water is cooled by aid of the ship's cooling system.

14. Scrubber system according to claim 10 wherein the seawater to the first section can be closed or reduced while scrubbing will continue with fresh water in the second section.

15. Scrubber system according to claim 10 wherein the first scrubber section is designed and operated to minimize the removal of contaminants from the exhaust gas which are considered as pollutants in the seawater being discharged.

16. Scrubber system according to claim 10 wherein the system is designed and operated to minimize the transfer of salt particles from the first to the second section.

17. Scrubber system according to claim 10 wherein the second scrubber section is designed and operated to maximize the removal of contaminants which are considered as pollutants in the cleaned exhaust gas.

18. Scrubber system according to claims 10 and 15 wherein the water from the second scrubber section is cleaned before being discharged.

19. Scrubber system for removal of SO₂ from a marine engine or a marine boiler **characterized in that** the fresh water in the system containing bicarbonate buffer is never renewed with more pure fresh water than a sufficient SO₂ reduction can be maintained.
